# EUROPEAN PATENT APPLICATION

(11) **EP 1 671 995 A1**
(43) Date of publication of application: **21.06.2006**
(21) Application number: 05026322.7
(22) Date of filing: 02.12.2005
(51) Int. Cl.: C08G 18/67, C08G 18/78, C09D 175/16

(54) **Radiation curable compositions of low viscosity**

(30) Priority: 15.12.2004 US 12456
(71) Applicant: Bayer MaterialScience LLC, Pittsburgh PA 15205 (US)
(72) Inventor: Roesler, Richard R., Wexford PA 15090 (US); Kinney, Carol L., Eighty Four PA 15330 (US); Britsch, Catherine M., Pittsburgh PA 15212 (US)
(74) Representative: Bailly, Peter

(57) **Abstract**

A radiation curable resin that includes from 10 to 40 equivalent percent (based on the isocyanate groups) of the resin of an allophanate containing material having one or two allophanate groups; from 0 to 40 equivalent percent of the resin of an allophanate containing material having three or more allophanate groups; and from 60 to 90 percent by equivalent of the resin of urethane acrylates. The resin has an equivalent weight of ethylenically unsaturated groups capable of undergoing a polymerization reaction of from 0,001 to 0.008 eq./g. The resin is used in radiation curable coating compositions that also include one or more photoinitiators, and optionally one or more reactive diluents, and optionally a solvent or solvent mixture.

## Description

### BACKGROUND OF THE INVENTION

### 1. Field of the Invention

The invention relates to compounds having isocyanate groups, allophanate groups and free-radically polymerizable C-C double bonds. Further, the invention relates to radiation-curable formulations and coating compositions that include the inventive compounds.

### 2. Description of the Prior Art

Coating compositions based on compounds containing isocyanate groups are well known in the art. Industrial processors of coating systems, such as the coatings industry, expect such compositions to meet a diverse profile of requirements. These requirements relate both to the processing properties and the service properties.

In terms of the processing properties it is very important that the coating systems combine a very low solvent content with a low viscosity. The low viscosity is required so that the coating materials can be applied without problems by customary techniques, such as by spraying, to the surface that is to be coated. The solvent content of these coating materials causes problems in that, when the coating materials are being processed, technically complex measures must be taken to ensure that the solvents released when the coating materials are applied and are drying are not emitted into the atmosphere.

Furthermore, it should be possible to cure the articles provided with the coating compositions by means of UV irradiation. In particular, following brief irradiation with relatively low radiation doses, the hardness should increase dramatically, but without longer irradiation leading to a further marked increase in hardness. With the prior art systems this hardening can be brought about only at very high radiation doses; in other words, the required dwell times in the existing irradiation units are still too long. There is therefore a need for systems having groups which on exposure to very low radiation doses, i.e. short exposure times, are consumed near-quantitatively in a polymerization reaction.

As far as the service properties are concerned, particular requirements include:
insensitivity to mechanical stress such as tension, extension, impact, scratching or abrasion;
   resistance to moisture (e.g., in the form of water vapor), solvents, petrol and dilute chemicals, as well as chemical environmental influences such as sulfuric acid rain, pancreatine, tree resin;
   resistance to environmental influences such as temperature fluctuations and UV radiation;
   high gloss of the coated surfaces;
   good adhesion to a variety of substrates such as good adhesion to a variety of substrates such as substrates coated beforehand with primers, fillers, color effect layers or other coatings, and also directly to plastics, wood, woodbase materials, paper, glass, ceramic, textiles, leather or metal.

A further requirement is complete curability of unexposed or non-radiation-curable areas of the coating materials, for example in shaded regions of, for example, three-dimensional substrates such as vehicle bodies or pores in wood, paper, foams, ceramic materials, in coating materials containing radiation-absorbing ingredients such as pigments, UV absorbers, fillers, and of spray mist deposits. Curing is intended to take place in the course of storage in air or with additional heating or baking.

U.S. Pat. No. 6,177,535 discloses radiation-curable prepolymers which contain urethane groups, no free isocyanate groups and are used as coating compositions.

U.S. Pat. Nos. 5,300,615 and 5,128,432 likewise disclose polyurethanes having free-radically polymerizable double bonds and no free isocyanate groups.

U.S. Pat. No. 5,739,251 discloses urethanes formed from alcohols and includes comprising β-γ-ethylenically unsaturated ether groups, which are virtually free from isocyanate groups, and discloses allophanates derived from these urethanes. These β-γ unsaturated compounds, however, have the particular disadvantage of a high viscosity.

U.S. Pat. No. 6,617,413 discloses compounds having isocyanate groups with or without blocking, allophanate groups and free-radically polymerizable C-C double bonds, the C--C double bonds being in activated form by virtue of a carbonyl group attached directly to them or by virtue of an oxygen atom in ether function, derived from polyisocyanates and alcohols. The compounds can be used in radiation-curable formulations and coating compositions to coat articles.

In all of the cited prior art, monomeric materials are removed because of the toxicity associated with such materials. This removal results in significant added processing and expense that could be avoided if monomer removal were not required.

Thus, there is a need in the art to prepare compounds containing isocyanate groups, allophanate groups and free-radically polymerizable C-C double bonds without the need for monomer removal.

### SUMMARY OF THE INVENTION

The present invention provides a radiation curable resin that includes from 10 to 40 equivalent percent (based on the isocyanate groups) of the resin of an allophanate containing material having one or two allophanate groups; from 0 to 40 equivalent percent of the resin of an allophanate containing material having three or more allophanate groups; and from 60 to 90 percent by equivalent of the resin of urethane acrylates. The resin has an equivalent weight of ethylenically unsaturated groups capable of undergoing a polymerization reaction of from 0,001 to 0.008 eq./g.

The present invention also provides a radiation curable coating composition that includes a) the above-described resin, b) one or more photoinitiators, and optionally c) one or more reactive diluents, and optionally d) a solvent or solvent mixture.

The present invention additionally provides a process for preparing a coated product that includes coating a substrate with the above-described coating composition and subjecting the coated substrate to radiation for a time sufficient to cure the composition.

### DETAILED DESCRIPTION OF THE INVENTION

Other than in the operating examples, or where otherwise indicated, all numbers or expressions referring to quantities of ingredients, reaction conditions, etc. used in the specification and claims are to be understood as modified in all instances by the term "about."

The present invention provides a radiation curable resin that contains ethylenically unsaturated groups capable of undergoing a polymerization and includes an allophanate containing material having one or two allophanate groups; optionally an allophanate containing material having three or more allophanate groups; and one or more urethane acrylates.

The present radiation curable resin that includes at least 10, in some cases at least 15, and in other cases at least 20 equivalent percent (based on the total isocyanate and allophanate groups) of the resin of an allophanate containing material having one or two allophanate groups. Also, the resin can contain up to 40, in some cases up to 35, and in other cases up to 30 equivalent percent of the resin of an allophanate containing material having one or two allophanate groups. The amount of allophanate containing material having one or two allophanate groups in the resin can be any value or range between any of the values recited above.

Also, the present radiation curable resin can optionally include an allophanate containing material having three or more allophanate groups. When included, the allophanate containing material having three or more allophanate groups can be present at least 1, in some cases at least 5, and in other cases at least 10 equivalent percent (based on the total isocyanate and allophanate groups) of the resin. Also, the resin can contain up to 40, in some cases up to 30, and in other cases up to 20 equivalent percent of the resin. The amount of allophanate containing material having three or more allophanate groups in the resin can be any value or range between any of the values recited above.

Further, the present radiation curable resin includes urethane acrylates at a level of at least 60, in some cases at least 65, and in other cases at least 70 equivalent percent (based on the total isocyanate and allophanate groups) of the resin. Also, the resin can contain up to 90, in some cases up to 80, and in other cases up to 75 equivalent percent of the resin of urethane acrylates. The amount of urethane acrylates in the resin can be any value or range between any of the values recited above.

As used herein, the term "urethane acrylate" refers to the reaction product of an isocyanate functional group containing material and a hydroxy-functional (meth)acrylate ester. Desirably, the urethane acrylates used in the present invention are completely reacted, i.e., all of the free isocyanate groups are converted to the corresponding urethane by way of reaction with hydroxy-functional (meth)acrylate esters.

Additionally, the present radiation curable resin has an equivalent weight of ethylenically unsaturated groups capable of undergoing a polymerization reaction of at least 0.001, in some cases at least 0.0015, and in other cases at least 0.002 eq./g. Also, the radiation curable can have an equivalent weight of ethylenically unsaturated groups capable of undergoing a polymerization reaction of up to 0.01, in some cases up to 0.008, in other cases up to 0,007, in some instances up to 0.006 and in other instances up to 0.005 eq./g. The amount of ethylenically unsaturated groups in the resin can be any value or range between any of the values recited above.

As a non-limiting example, a resin based on two moles of 1,6-hexamethylene di-isocyanate (HDI) and three moles of hydroxyethyl acrylate, would have a molecular weight of 733 and have three equivalents of unsaturation resulting in 3/733, or 0.0041 eq./g.

In an embodiment of the invention, the above described radiation curable resin can prepared by reacting A) a polyisocyanate, with B) a first hydroxyl functional material, at a NCO:OH equivalent ratio of from 2:1 to 15:1 to provide an NCO functional allophanate containing material, and reacting the allophanate material, with C) a second hydroxyl functional material, which can be the same or different than the first hydroxyl functional material at a NCO:OH equivalent ratio of from 0.75:1 to 1:0.75, where at least one of the first hydroxyl functional material and the second hydroxyl functional material includes an ethylenically unsaturated group capable of undergoing a polymerization reaction.

In a particular embodiment of the invention, the first hydroxyl functional material and/or the second hydroxyl functional material includes one or more hydroxy functional lactone ester (meth)acrylates having a number average molecular weight of from about 200 to about 2000 according to the formula:

CH₂=C(R¹)-C(O)-O-R²-[O-C(O)-R³]ₙ-OH

where
n is an integer of from 1 to 5,
R¹ is hydrogen or methyl,
R² represents an alkylene group or substituted alkylene group having from 2 to 10, in some cases 2 to 4, carbon atoms and which may be substituted with one or more alkyl groups having from 1 to 12, in some cases 1 to 8, and in other cases 1 to 4, carbon atoms, and
R³ represents a straight or branched chain alkylene group of from 3 to 8 carbon atoms, and which may be substituted with one or more alkyl groups having from 1 to 12, in some cases 1 to 8, and in other cases 1 to 4, carbon atoms.

In an embodiment of the invention, the first hydroxyl functional material and/or the second hydroxyl functional material can include one or more hydroxy functional (meth)acrylates according to the formula:

CH₂=C(R¹)-C(O)-O-R²-OH

wherein R¹ and R² are as described above.

As used herein, the terms "(meth)acrylate" and "(meth)acrylic" are meant to include both acrylic and methacrylic acid derivatives, such as the corresponding alkyl esters often referred to as acrylates and methacrylates, which the term (meth)acrylate is meant to encompass.

In a particular embodiment of the invention, the first hydroxyl functional material and/or the second hydroxyl functional can include a poly(ε-caprolactone) ester of hydroxyethyl (meth)acrylate and/or a poly(ε-caprolactone) ester of hydroxypropyl (meth)acrylate and the second hydroxyl functional material comprises a material selected from the group consisting of a poly(ε-caprolactone) ester of hydroxyethyl (meth)acrylate, a poly(ε-caprolactone) ester of hydroxypropyl (meth)acrylate, hydroxyethyl (meth)acrylate, hydroxypropyl (meth)acrylate, and combinations thereof. A non-limiting example of such a hydroxyl functional material that can be used in the invention is TONE® M-100 (UCAR Coatings Resins, Danbury, CT).

Any suitable polyisocyanate can be used in the present invention. Suitable polyisocyanates include, but are not limited to polyisocyanates according to the structure R⁴(NCO)₂, where R⁴ represents an aliphatic hydrocarbon residue having 4 to 12 carbon atoms, a cycloaliphatic hydrocarbon residue having 6 to 15 carbon atoms, an aromatic hydrocarbon residue having 6 to 15 carbon atoms or an araliphatic hydrocarbon residue having 7 to 15 carbon atoms.

In a particular embodiment of the invention, the polyisocyanate is selected from hexamethylene diisocyanate, 4,4'-dicyclohexylmethane diisocyanate, isophorone diisocyanate, isocyanurates, triisocyanates, uretdione diisocyanates and mixtures thereof.

The present invention also provides a radiation curable coating composition that includes
a) the above-described resin,
b) one or more photoinitiators, and optionally
c) one or more reactive diluents, and optionally
d) a solvent or solvent mixture.

The present radiation curable resin is includes in the radiation curable coating composition at a level of at least 15, in some cases at least 20 and in other cases at least 25 wt.% based on the weight of the radiation curable coating composition. Also, the radiation curable resin is includes in the radiation curable coating composition at a level of up to 97, in some cases up to 95, in other cases up to 90, in some situations up to 85, in other situations up to 80 and in some instances up to 75 wt.% based on the weight of the radiation curable coating composition. The radiation curable resin is includes in the radiation curable coating composition at any level or can range between any of the levels stated above.

Photoinitiators are in the radiation curable coating composition at a level of at least 0.1, in some instances at least 1, in other instances at least 3, in some cases at least 3.5 and in other cases at least 4 wt.% based on the weight of the radiation curable coating composition. Also, the photoinitiators are includes in the radiation curable coating composition at a level of up to 7, in some cases up to 6, in other cases up to 5 wt.% based on the weight of the radiation curable coating composition. The photoinitiators are includes in the radiation curable coating composition at any level or can range between any of the levels stated above.

In the present invention, at least some curing takes place by means of actinic radiation, thus at least one photoinitiator, which is able to initiate the polymerization of ethylenically unsaturated double bonds is included in the radiation curable coating composition. Suitable photoinitiators that can be used include, but are not limited to benzophenones in combination with tertiary amines, alkylbenzophenones, 4,4'-bis(dimethylamino)benzophenone (Michler's ketone), anthrone and halogenated benzophenones or mixtures of the types stated. Of further suitability are (type II) initiators such as benzoin and its derivatives, benzil ketals, acylphosphine oxides, 2,4,6-trimethylbenzoyldiphenylphosphine oxide for example, bisacylphosphine oxides, phenylglyoxylic esters, camphorquinone, α-aminoalkylphenones, α,α-dialkoxyacetophenones and α-hydroxyalkylphenones.
In an embodiment of the invention, photoinitiators, which are activated by UV or visible light, are used.

Reactive diluent can optionally be included in the radiation curable coating composition and when used are used at a level of at a level of at least 1, in some cases at least 5 and in other cases at least 10 wt.% based on the weight of the radiation curable coating composition. Also, the reactive diluents can be included in the radiation curable coating composition at a level of up to 25, in some cases up to 20, and in other cases up to 15 wt.% based on the weight of the radiation curable coating composition. The reactive diluents can be included in the radiation curable coating composition at any level or can range between any of the levels stated above.

Any suitable reactive diluent c) can be used in the present radiation curable coating composition. Non-limiting examples of suitable reactive diluents include esters of acrylic acid or methacrylic acid, in some cases of acrylic acid, with mono- or polyfunctional alcohols; alcohols such as the isomeric butanols, pentanols, hexanols, heptanols, octanols, nonanols and decanols, and also cycloaliphatic alcohols such as isobornol, cyclohexanol and alkylated cyclohexanols, dicyclopentanol, arylaliphatic alcohols such as phenoxyethanol and nonylphenylethanol, and tetrahydrofurfuryl alcohols; alkoxylated derivatives of such alcohols; dihydric alcohols such as ethylene glycol, propane-1,2-diol, propane-1,3-diol, diethylene glycol, dipropylene glycol, the isomeric butanediols, neopentyl glycol, hexane-1,6-diol, 2-ethylhexanediol and tripropylene glycol or else alkoxylated derivatives of these alcohols. In an embodiment of the invention the dihydric alcohols are hexane-1,6-diol, dipropylene glycol and tripropylene glycol. In some cases trihydric alcohols such as glycerol or trimethylolpropane or their alkoxylated derivatives can be used. Likewise tetrahydric alcohols such as pentaerythritol or its alkoxylated derivatives can be used. In a particular embodiment of the invention, the reactive diluents are selected from alkyl mono-, di- tri- and tetra (meth)acrylates and in particular alkyl mono-, di- tri- and tetra (meth)acrylates, where the alkyl is an alkyl group of from 1 to 8 carbon atoms.

Solvents or solvent mixtures can optionally be included in the radiation curable coating composition and when used are used at a level of at a level of at least 1, in some cases at least 5, in other cases at least 10 in some instances at least 20, and in other instances at least 25 wt.% based on the weight of the radiation curable coating composition. Also, the solvents or solvent mixtures can be included in the radiation curable coating composition at a level of up to 70, in some cases up to 60, and in other cases up to 50 wt.% based on the weight of the radiation curable coating composition. The solvents or solvent mixtures can be included in the radiation curable coating composition at any level or can range between any of the levels stated above.

Suitable solvents that can be used in the radiation curable coating composition include solvents that are inert towards the functional groups present in the composition. Non-limiting examples of suitable solvents include those used in the paint industry, such as hydrocarbons, ketones and esters, e.g. toluene, xylene, isooctane, acetone, butanone, methyl isobutyl ketone, ethyl acetate, butyl acetate, tetrahydrofuran, N-methylpyrrolidone, dimethylacetamide and dimethylformamide. In an embodiment of the invention, the solvents include acetone, methyl ethyl ketone, tetrahydrofuran, dichloromethane, toluene, and C₁ -C₄ -alkyl esters of acetic acid, such as ethyl acetate or butyl acetate.

The present invention also provides a process for preparing a coated product that includes coating a substrate with the above-described coating composition and subjecting the coated substrate to actinic radiation for a time sufficient to cure the composition. As used herein, the term "actinic radiation" refers to electromagnetic, ionizing radiation, including, but not limited to electron beams, UV radiation and visible light.

Any suitable form of actinic radiation can be used as the radiation in the present method. In an embodiment of the invention, the radiation is UV radiation. In a particular embodiment, the radiation has a wavelength of at least 300nm, in some cases from about 320 to about 450nm.

In an embodiment of the invention electron beams are used instead of UV irradiation and in this situation there is typically no need for a photoinitiator. Electron beams are known in the art and are typically generated by means of thermal emission and accelerated by way of a potential difference. The high-energy electrons then pass through a titanium foil and are guided onto the present composition to be cured.

In another embodiment of the invention chemical sources of free radicals can be used. Non-limiting examples of chemical free radical sources include peroxides and azo compounds. Accelerants can also be used, as a non-limiting example, copper salts can be used as accelerants with peroxide chemicals.

Non-limiting examples of peroxides that can be used as chemical sources of free radicals include, but are not limited to, ketone peroxides, such as methyl ethyl ketone peroxide; diacyl peroxides, non-limiting examples including benzoyl peroxide, decanoyl peroxide, lauroyl peroxide, and succinic acid peroxide; dialkyl peroxides, non-limiting examples including dicumyl peroxide, t-butyl cumyl peroxide, di(t-amyl) peroxide, and di(t-butyl) peroxide; diperoxyketals, non-limiting examples including 1,1-di(t-butylperoxy)-cyclohexane, 1,1-di(t-amlperoxy)-cyclohexane, ethyl 3,3-di(t-amylperoxy) butanoate, and ethyl 3,3-di(t-butylperoxy) butyrate; t-butyl peroxy esters, non-limiting examples including t-butyl perbenzoate, t-butyl peroxy-2-ethylhexyl carbonate, t-butyl peroxy isopropyl carbonate, t-butyl peroctoate, and 2,5 dimethyl 2,5-di (2-ethyl hexanoylperoxy) hexane, and hydroperoxides, non-limiting examples being cumene hydroperoxide and t-butyl hydroperoxide The choice of peroxide is typically governed by the temperature during processing and curing.

Non-limiting examples of azo compounds that can be used as chemical sources of free radicals include, but are not limited to the known free-radical initiators, including aliphatic azo compounds such as azodiisobutyronitrile, azo-bis-2-methylvaleronitrile, 1,1'-azo-bis-1-cyclohexanenitrile and alkyl 2,2'-azo-bis-isobutyrates. The choice of azo compound is typically governed by the temperature during processing and curing.

Optionally, UV absorbers and/or HALS stabilizers can be included in the coating composition. Suitable examples of such agents include, but are not limited to Tinuvin® 400 (Ciba Spezialitätenchemie GmbH, Lampertheim, DE), benzotriazoles such as Tinuvin® 622 (Ciba Spezialitätenchemie GmbH, Lampertheim, DE) or oxalic dianilides (e.g. Sanduvor® 3206 (Clariant, Muttenz, CH) and are added at 0.5% - 3.5% by weight, based on resin solids. Suitable HALS stabilizers available commercially include Tinuvin® 292 or Tinuvin® 123 (Ciba Spezialitätenchemie GmbH, Lampertheim, DE) or Sanduvor® 3258 (Clariant, Muttenz, CH). They can be used at 0.5% - 2.5% by weight based on resin solids.

Additionally, the coating composition can include additives such as pigments, dyes, fillers, levelling additives and devolatilizing additives.

Additionally, catalysts known from polyurethane chemistry for accelerating the NCO/OH reaction can be present in the coating composition. Non-limiting examples include tin salts or zinc salts or organotin compounds, tin soaps and/or zinc soaps such as, for example, tin octoate, dibutyltin dilaurate, dibutyltin oxide or tertiary amines such as diazabicyclo[2.2.2]octane (DABCO).

The application of the coating compositions of the invention to the material to be coated takes place with the methods known and customary in coatings technology, such as spraying, knife coating, rolling, pouring, dipping, spin coating, brushing or squirting or by means of printing techniques such as screen, gravure, flexographic or offset printing and also by means of transfer methods.
Suitable substrates are, for example, wood, metal, including in particular metal as used in the applications of wire enamelling, coil coating, can coating or container coating, and also plastic, including plastic in the form of films, especially ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM, and UP (abbreviations according to DIN 7728T1), paper, leather, textiles, felt, glass, wood, wood materials, cork, inorganically bonded substrates such as wooden boards and fibre cement slabs, electronic assemblies or mineral substrates. It is also possible to coat substrates consisting of a variety of the abovementioned materials, or to coat already coated substrates such as vehicles, aircraft or boats and also parts thereof, especially vehicle bodies or parts for exterior mounting. It is also possible to apply the coating compositions to a substrate temporarily, then to cure them partly or fully and optionally to detach them again, in order to produce films, for example.
For curing it is possible for solvents present, for example, to be removed entirely or partly by flashing off.

In an embodiment of the invention, radiation cure takes place by exposure to high-energy radiation, in other words UV radiation or daylight, such as light of wavelength 200 to 700 nm or by bombardment with high-energy electrons (electron beams, 150 to 300 keV). Radiation sources of light or UV light that can be used include high-pressure or medium-pressure mercury vapour lamps, for example mercury vapour modified by doping with other elements such as gallium or iron, lasers, pulsed lamps (known under the designation of UV flashlight lamps), halogen lamps or excimer emitters are likewise possible. As an inherent part of their design or through the use of special filters and/or reflectors, the emitters may be equipped so that part of the UV spectrum is prevented from being emitted.

By way of example, for reasons of occupational hygiene, for example, the radiation assigned to UV-C or to UV-C and UV-B may be filtered out. The emitters may be installed in stationary fashion, so that the material for irradiation is conveyed past the radiation source by means of a mechanical device, or the emitters may be mobile and the material for irradiation may remain stationary in the course of curing. The radiation dose which is normally sufficient for crosslinking in the case of UV curing is situated in the range from 80 to 5000 mJ/cm2.

Irradiation can if desired also be carried out in the absence of oxygen, such as under an inert gas atmosphere or an oxygen-reduced atmosphere. Suitable inert gases are preferably nitrogen, carbon dioxide, noble gases or combustion gases. Irradiation may additionally take place by covering the coating with media transparent to the radiation. Examples of such are, for example, polymeric films, glass or liquids such as water.

Depending on the radiation dose and curing conditions it is possible to vary the type and concentration of any initiator used, in a manner known to the skilled person.

The applied film thickness (prior to curing) of the coating composition is typically between 0.5 and 5000 µm, in some cases between 5 and 1000 µm, and in other cases between 15 and 200 µm. Where solvents are used, they can be removed after application and before curing, by customary methods known in the art.

The present invention will further be described by reference to the following examples. The following examples are merely illustrative of the invention and are not intended to be limiting. Unless otherwise indicated, all percentages are by weight.

### Starting Materials

PCHEA - TONE® M-100 (UCAR Coatings Resins, Danbury, CT), a poly(ε-caprolactone) ester of 2-hydroxyethyl acrylate), hydroxyl equivalent weight = 344.
HPA = hydroxypropyl acrylate, hydroxyl equivalent weight = 130.1.

### Example 1

### Preparation of acrylated allophanate

Into a three liter round bottom flask fitted with stirrer, heater, dropping funnel and oxygen inlet tube was added 1275.0 g (15.18 eq) hexamethylene diisocyanate, 468.6 g (1.36 eq) poly(ε- -caprolactone) ester of hydroxyethyl acrylate (PCHEA) and 0.85 g butylated hydroxy toluene stabilizer. The mixture was agitated under air until homogenous ad heated to 80°C when 1.49 g zinc octoate (22% Zn) catalyst were added. The reaction mixture was then heated to 100°C and held at this temperature for three and one half hours when the isocyanate was 29.55% NCO as determined by potentiometric titration. 0.7 g benzoyl chloride was added to deactivate the zinc catalyst. The viscosity was less than 20 mPa·sec at 25°C.

### Example 2

### Preparation of HPA/PCHEA adduct of acrylated allophanate

Into a five hundred milliliter round bottom flask fitted with stirrer, heater, dropping funnel and oxygen inlet tube was added 94.1 g (0.66 eq) acrylated allophanate from example 1, 43.5 g (0.33 eq) hydroxypropylacrylate (HPA), 113.9 g (0.33 eq) PCHEA and 1.25 g butylated hydroxy toluene stabilizer. The mixture was agitated until homogenous when 0.06 g dibutyltin dilaurate catalyst were added. The reaction mixture was then heated to 60°C and held at this temperature for six hours when no isocyanate was seen in an IR spectrum. The viscosity was 2,600 mPa·sec at 25°C; and the density was 9.3 lbs/gal.

### Formulation, cure procedure and testing

Resins were combined with 5 phr (by weight) of photoinitiator DAROCURE® 4265 (Ciba Specialty Chemicals, Corp., Tarytown, NY) and 1 phr (by weight) of photoinitiator IRGACURE® 184 (Ciba Specialty Chemicals Corp.). The formulation was mixed until homogenous and diluted to 85% solids with butyl acetate. Formulations were formed into films using a 4 mil wet film thickness draw down bar on both cold rolled steel panels for MEK double rub evaluations and glass panels for pendulum hardness evaluations. All panels were flashed for 30 seconds after draw down and cured for two minutes under a H&S AUTOSHOT^{™} 400A Low Intensity UVA lamp (H&S Autoshot Manufacturing Co., Georgetown, Ontario, Canada) at a lamp distance of 10 inches.

MEK double rubs were done using a two pound ball peen hammer covered with several layers of cheesecloth. The cheesecloth was saturated with MEK. The MEK-wet hammer was placed on the coating surface such that the hammer is at a 90° angle to the surface. Without applying downward pressure, the hammer was pushed back and forth over approximately 4" long area of the coating. One forward and back motion is counted as one double-rub. The cloth was saturated with MEK after every twenty-five double rubs. The end-point was when the hammer broke through the substrate to the panel surface.

The pendulum hardness was determined using the (now withdrawn) ASTM D 4366-95 (Test Method A)-Standard Test Methods for hardness of Organic Coatings by Pendulum Damping Tests using a Koenig Hardness Instrument.

| | |
|---|---|
| Example coating | 3 |
| Ingredient (eq ratios) Acrylated allophanate (Example 1) | 1.0 |
| PCHEA | 0.5 |
| HPA | 0.5 |
| Performance properties MEK double rubs | 100+ |
| Pendulum Hardness (sec) | 14.7 |

The data demonstrate that coating films formed from the present radiation curable resin, including allophanate containing material, residual monomeric polyisocyanate and ethylenically unsaturated groups capable of undergoing a polymerization have excellent solvent resistance and toughness properties.

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. A radiation curable resin comprising
from 10 to 40 equivalent percent (based on the isocyanate groups) of the resin of an allophanate containing material having one or two allophanate groups;
from 0 to 40 equivalent percent of the resin of an allophanate containing material having three or more allophanate groups;
from 60 to 90 percent by equivalent of the resin of urethane acrylates;
wherein the resin has an equivalent weight of ethylenically unsaturated groups capable of undergoing a polymerization reaction of from 0.001 to 0.008 eq./g.

2. The radiation curable resin according to Claim 1 prepared by reacting
A) a polyisocyanate, with
B) a first hydroxyl functional material,
at a NCO:OH equivalent ratio of from 2:1 to 15:1 to provide an NCO functional allophanate containing material, and reacting the allophanate material with
C) a second hydroxyl functional material, which can be the same or different than the first hydroxyl functional material
at a NCO:OH equivalent ratio of from 0.75:1 to 1:0.75,
wherein at least one of the first hydroxyl functional material and the second hydroxyl functional material comprises an ethylenically unsaturated group capable of undergoing a polymerization reaction.

3. The radiation curable resin according to Claim 2, wherein the first hydroxyl functional material and/or the second hydroxyl functional material comprises one or more hydroxy functional lactone ester (meth)acrylates having a number average molecular weight of from about 200 to about 2000 and having the formula:
CH₂=C(R¹)-C(O)-O-R²-[O-C(O)-R³]ₙ-OH
wherein
n is an integer of from 1 to 5,
R¹ is hydrogen or methyl,
R² represents an alkylene group or substituted alkylene group having from 2 to 10 carbon atoms and which may be substituted with one or more alkyl groups having from 1 to 12 carbon atoms, and
R³ represents a straight or branched chain alkylene group of from 3 to 8 carbon atoms, and which may be substituted with one or more alkyl groups having from 1 to 12 carbon atoms.

4. The radiation curable resin according to Claim 2, wherein the first hydroxyl functional material and/or the second hydroxyl functional material comprises one or more hydroxy functional (meth)acrylates according to the formula:
CH₂=C(R¹)-C(O)-O-R²-OH
wherein
R¹ is hydrogen or methyl, and
R² represents an alkylene group or substituted alkylene group having from 2 to 10 carbon atoms and which may be substituted with one or more alkyl groups having from 1 to 12 carbon atoms.

5. The radiation curable resin according to Claim 2, wherein the first hydroxyl functional material comprises a poly(ε-caprolactone) ester of hydroxyethyl (meth)acrylate and/or a poly(ε-caprolactone) ester of hydroxypropyl (meth)acrylate and the second hydroxyl functional material comprises a material selected from the group consisting of a poly(ε-caprolactone) ester of hydroxyethyl (meth)acrylate, a poly(ε-caprolactone) ester of hydroxypropyl (meth)acrylate, hydroxyethyl (meth)acrylate, hydroxypropyl (meth)acrylate, and combinations thereof.

6. The radiation curable resin according to Claim 2, wherein the polyisocyanate is a polyisocyanate according to the structure R⁴(NCO)₂, wherein R⁴ represents an aliphatic hydrocarbon residue having 4 to 12 carbon atoms, a cycloaliphatic hydrocarbon residue having 6 to 15 carbon atoms, an aromatic hydrocarbon residue having 6 to 15 carbon atoms or an araliphatic hydrocarbon residue having 7 to 15 carbon atoms.

7. The radiation curable resin according to Claim 2, wherein the polyisocyanate is selected from the group consisting of hexamethylene diisocyanate, 4,4'-dicyclohexylmethane diisocyanate, isophorone diisocyanate, isocyanurates, triisocyanates, uretdione diisocyanates and mixtures thereof.

8. A radiation curable coating composition comprising
a) the resin according to Claim 1,
b) one or more photoinitiators, and optionally
c) one or more reactive diluents, and
d) a solvent or solvent mixture.

9. The radiation curable coating composition according to Claim 8,
wherein the resin is prepared by reacting
A) a polyisocyanate, with
B) a first hydroxyl functional material,
at a NCO:OH equivalent ratio of from 2:1 to15:1 to provide an NCO functional allophanate containing material, and reacting the allophanate material with
C) a second hydroxyl functional material, which can be the same or different than the first hydroxyl functional material
at a NCO:OH equivalent ratio of from 0.75:1 to 1:0.75,
wherein at least one of the first hydroxyl functional material and the second hydroxyl functional material comprises an ethylenically unsaturated group capable of undergoing a polymerization reaction.

10. The radiation curable coating composition according to Claim 9
wherein the polyisocyanate is a polyisocyanate according to the structure R⁴(NCO)₂, wherein R⁴ represents an aliphatic hydrocarbon residue having 4 to 12 carbon atoms, a cycloaliphatic hydrocarbon residue having 6 to 15 carbon atoms, an aromatic hydrocarbon residue having 6 to 15 carbon atoms or an araliphatic hydrocarbon residue having 7 to 15 carbon atoms.

11. The radiation curable coating composition according to Claim 9,
wherein the polyisocyanate is selected from the group consisting of hexamethylene diisocyanate, 4,4'-dicyclohexylmethane diisocyanate, isophorone diisocyanate, isocyanurates, triisocyanates, uretdione diisocyanates and mixtures thereof.

12. The radiation curable coating composition according to Claim 9,
wherein the first hydroxyl functional material and/or the second hydroxyl functional material comprises one or more hydroxy functional lactone ester (meth)acrylates having a number average molecular weight of from about 200 to about 2000 and having the formula:
CH₂=C(R¹)-C(O)-O-R²-[O-C(O)-R³]ₙ-OH
wherein
n is an integer of from 1 to 5,
R¹ is hydrogen or methyl,
R² represents an alkylene group or substituted alkylene group having from 2 to 10 carbon atoms and which may be substituted with one or more alkyl groups having from 1 to 12 carbon atoms, and
R³ represents a straight or branched chain alkylene group of from 3 to 8 carbon atoms, and which may be substituted with one or more alkyl groups having from 1 to 12 carbon atoms.

13. The radiation curable coating composition according to Claim 9,
wherein the first hydroxyl functional material and/or the second hydroxyl functional material comprises one or more hydroxy functional (meth)acrylates according to the formula:
CH₂=C(R¹)-C(O)-O-R²-OH
wherein
R¹ is hydrogen or methyl, and
R² represents an alkylene group or substituted alkylene group having from 2 to 10 carbon atoms and which may be substituted with one or more alkyl groups having from 1 to 12 carbon atoms.

14. The radiation curable coating composition according to Claim 9,
wherein wherein the first hydroxyl functional material comprises a poly(ε-caprolactone) ester of hydroxyethyl (meth)acrylate and/or a poly(ε-caprolactone) ester of hydroxypropyl (meth)acrylate and the second hydroxyl functional material comprises a material selected from the group consisting of a poly(ε-caprolactone) ester of hydroxyethyl (meth)acrylate, a poly(ε-caprolactone) ester of hydroxypropyl (meth)acrylate, hydroxyethyl (meth)acrylate, hydroxypropyl (meth)acrylate, and combinations thereof.

15. The radiation curable coating composition according to Claim 9,
wherein the reactive diluents are selected from the group consisting of alkyl mono-, di- tri- and tetra (meth)acrylates, wherein said alkyl group is an alkyl group of from 1 to 8 carbon atoms.

16. The radiation curable coating composition of Claim 8 comprising:
from about 15 to about 97% by weight of a),
from about 3 to about 7% by weight of b),
from about 0 to about 25% by weight of c), and
from about 0 to about 70% by weight of d)
wherein the percentages by weight of components a), b) and c) and d) total 100%.

17. The radiation curable coating composition of Claim 8, wherein said reactive diluent c) is selected from the group consisting of alkyl mono-, di- tri- and tetra (meth)acrylates.

18. The radiation curable coating composition of Claim 8 further comprising chemical sources of free radicals.

19. The radiation curable coating composition of Claim 18, wherein the chemical sources of free radical sources include peroxides and/or azo compounds.

20. The radiation curable coating composition of Claim 18 further comprising one or more accelerants.

21. A process for preparing a coated product comprising coating a substrate with the coating composition according to Claim 8 and subjecting the coated substrate to radiation for a time sufficient to cure the composition.

22. The process of Claim 21, wherein said radiation is UV radiation.

23. The process of Claim 22, wherein said radiation has a wavelength of at least 300nm.

24. The process of Claim 23, wherein said radiation has a wavelength of from about 320 to about 450nm.
